# EUROPEAN PATENT SPECIFICATION

(11) **EP 3 798 027 B1**
(45) Date of publication and mention of the grant of the patent: **01.05.2024**
(21) Application number: 20198880.5
(22) Date of filing: 29.09.2020
(51) Int. Cl.: B60C 15/06, B60C 15/00

(54) **TIRE WITH IMPROVED BEAD PORTION**
REIFEN MIT VERBESSERTEM WULSTABSCHNITT
PNEU AYANT UNE PARTIE DE TALON AMÉLIORÉE

(30) Priority: 30.09.2019 US 201916587091
(43) Date of publication of application: 31.03.2021
(73) Proprietor: The Goodyear Tire & Rubber Company, Akron, OH 44316 (US)
(72) Inventor: REICHLING, Gilles, L-9189 Vichten (LU); FOSAM, Richard, L-7462 Moesdorf (LU); DE WIT, Erik, L-9283 Diekirch (LU); RADICS, Markus Erich, D-36088 Huen (DE); VISWANATHAN, Ganesh, L-8710 Boevange-Sur-Attert (LU); FROISSARD, Jean-Pierre, B-6687 Givry (BE)
(74) Representative: Kutsch, Bernd

(56) References cited:
- EP-A1- 2 602 124
- EP-A1- 3 196 055
- JP-A- 2013 001 283

## Description

### Field of the Invention

The present invention relates to a tire provided with an improved sidewall/bead construction.

### Background of The Invention

A factor for reducing the endurance of a bead portion of a tire includes delamination (separation) between a carcass and a rubber member contacting the outer side in the tread width direction of the carcass. One factor causing the separation may be stress generated by upthrust from a rim. Due to this stress, shear strain may cause delamination between the carcass and the bead.

In recent years, with an increased awareness for environmental concerns, the reduction of the tire weight has been desired. By reducing the tire weight, it may be possible to reduce rolling resistance, resulting in the reduction of fuel consumption. A tire with the aforementioned structure may increase tire weight. By shortening a bead filler as compared with a standard bead filler, reduction of the bead weight may still be possible. In a tire with a shortened bead filler, since stress generated by curvature and deformation of a side wall portion acts toward the vicinity of a front end portion of the shortened bead filler, separation may occur near the front end portion of the bead filler. In this regard, another reinforcing member, or flipper, may be provided at the outer side in the tire radial direction of the bead core and bead filler.

JP 2013 001 283 A and EP 2 602 124 A1 describe a tire having features of the preamble of claim 1.

### Summary of the Invention

The invention relates to a tire in accordance with claim 1 and to a method in accordance with claim 6.

Dependent claims refer to preferred embodiments of the invention.

A bead portion of a tire in accordance with the present invention includes a bead core, a first bead filler arranged at a radially outer side of the bead core, a first carcass extending around the bead core and the first bead filler, a second carcass extending radially inward and adjacent the first carcass, a second bead filler disposed axially adjacent the second carcass, a first chafer disposed at an axially outer side of the second bead filler, a second chafer extended about a radially inner end of the first carcass, and a flipper extending radially inward from a position axially adjacent an axially outer side of the first bead filler. The flipper further extends axially inward adjacent a radially inner side of the bead core. The flipper further extends radially outward to position axially adjacent a first part of the first carcass, a second part of the first carcass, the second carcass, and a radially outermost end of the first bead filler. The first carcass extends radially inward adjacent an axially inner side of the bead core, axially outward adjacent a radially inner side of the bead core, and radially outward adjacent an axially outer side of the bead core.

According to one aspect of the invention, the flipper extends radially outward beyond the radially outermost end of the first bead filler.

According to a preferred aspect of the bead portion, the second bead filler extends axially between the second carcass and the first chafer.

According to yet another preferred aspect of the bead portion, a toe guard extends between the first chafer and the second chafer.

According to still another preferred aspect of the bead portion, the toe guard extends between the first carcass and the second carcass.

A method in accordance with present invention stiffens a bead portion of a tire. The method includes the steps of: arranging a first bead filler at a radially outer side of a bead core; extending a first carcass around the bead core and the first bead filler; extending the first carcass radially inward adjacent an axially inner side of the bead core; extending the first carcass axially outward adjacent a radially inner side of the bead core; extending the first carcass radially outward adjacent an axially outer side of the bead core; extending a second carcass radially inward and adjacent the first carcass; arranging a second bead filler axially adjacent the second carcass; arranging a first chafer at an axially outer side of the second bead filler; extending a second chafer about a radially inner end of the first carcass; extending a flipper radially inward from a position axially adjacent an axially outer side of the first bead filler; extending the flipper axially inward adjacent a radially inner side of the bead core; and extending the flipper radially outward to position axially adjacent a first part of the first carcass, a second part of the first carcass, the second carcass, and a radially outermost end of the first bead filler.

According to the invention, the method includes terminating a radially innermost end of the second carcass axially between the first carcass and a toe guard.

According to a preferred aspect of the method, another step includes extending the flipper radially outward beyond the radially outermost end of the first bead filler.

According to yet another preferred aspect of the method, another step includes extending the second bead filler axially between the second carcass and the first chafer.

### Definitions

As used herein and in the claims:
"Apex" means an elastomeric filler located radially above the bead core and between a carcass plies and a carcass ply turnup.
"Annular" means formed like a ring.
"Axial" and "axially", or "in a tread width direction", refer to lines or directions that are parallel to the axis of rotation of the tire.
"Bead portion" means that part of the tire comprising an annular tensile member wrapped by ply cords and shaped, with or without other reinforcement elements such as flippers, chippers, apexes, toe guards and chafers, to fit the design rim.
"Carcass" means the tire structure apart from the belt structure, tread, undertread, and sidewall rubber over the plies, but including the beads.
"Chipper" refers to a narrow band of fabric or steel cords located in the bead area whose function is to reinforce the bead area and stabilize the radially inwardmost part of the sidewall.
"Circumferential" and "circumferentially" mean lines or directions extending along the perimeter of the surface of the annular tire parallel to the equatorial plane (EP) and perpendicular to the axial direction.
"Equatorial plane (EP)" means the plane perpendicular to the tire's axis of rotation and passing through the center of its tread; or the plane containing the circumferential centerline of the tread.
"Flipper" refers to a reinforcing fabric around the bead core for strength and to tie the bead core in the tire body.
"Lateral" means an axial direction.
"Ply" means a cord-reinforced layer of rubber-coated radially deployed or otherwise parallel cords.
"Radial" and "radially" mean directions radially toward or away from the axis of rotation of the tire.
"Radial ply tire" means a belted or circumferentially-restricted pneumatic tire in which at least one ply has cords which extend from bead to bead and the ply is laid at cord angles between 65° and 90° with respect to the equatorial plane (EP) of the tire.
"Sidewall" means that portion of a tire between the tread and the bead portion.
"Toe guard" refers to the circumferentially deployed elastomeric rim-contacting portion of the tire axially inward of each bead.
"Turnup end" means the portion of a carcass ply that turns upward (i.e., radially outward) from the bead core about which the ply is wrapped.

### Brief Description of Drawings

FIG. 1 is a schematic cross-sectional view along a tire radial direction and a tread width direction of a tire in accordance with the present invention.
FIG. 2 is an enlarged cross-sectional view of part of the tire of FIG. 1.

### Description of Example Embodiments of The Present Invention

In the following description of the drawings, the same or similar reference numerals are used to designate the same or similar parts. It may be appreciated that the drawings are schematically shown and the ratio and the like of each dimension may be different from these examples. Therefore, the specific dimensions must be determined in view of the below explanation. It is needless to say that relations and ratios among the respective dimensions may differ among the diagrams.

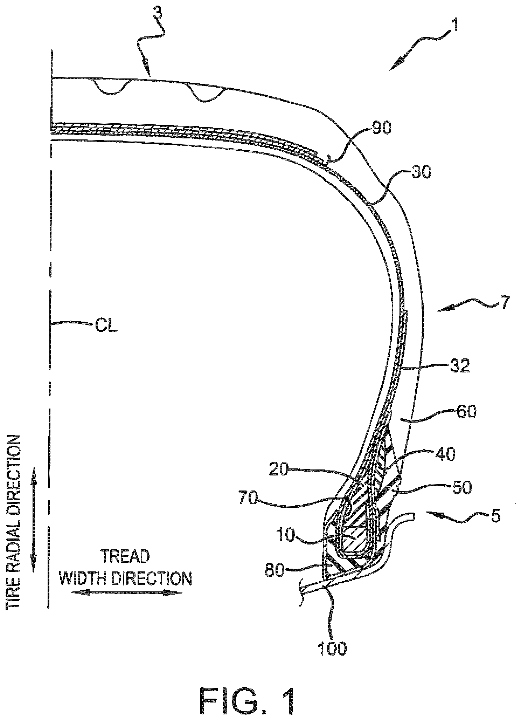

FIG. 1 shows a cross sectional view of a pneumatic or non-pneumatic tire 1 along a tire radial direction and a tread width direction of the tire in accordance with the present invention. The tire 1, which is preferably a pneumatic tire, may be mounted on a standard rim 100. The tire 1 may have a normal inner pressure and support a normal load. In the embodiment, the tire 1 includes a tread portion 3, a bead portion 5, and a side wall portion 7. The tread portion 3 may contact a road surface (not shown).

The tire 1 further includes two bead portions 5 (one shown), a first carcass layer 30, a second carcass layer 32, a side rubber layer 60, and a belt portion 90. The first carcass layer 30 is preferably arranged throughout the tread portion 3, the bead portion 5, and the side wall portion 7. The first carcass layer 30 preferably extends between a pair of the bead cores 10 (one shown) and a pair of the first bead fillers 20 (one shown). The first carcass layer 30 curves radially inward to the axially inner side of the bead cores 10 and the first bead fillers 20 and wrap around the axially outer sides of the bead cores 10.

The second carcass layer 32 is preferably arranged throughout the tread portion 3, the bead portion 5, and the side wall portion 7. The second carcass 32 may curves radially inward to the axially inner side of the bead cores 10. In the embodiment shown, the second carcass layer 32 extends on the axially outer side of the bead core 10 and ends at a radial position and without ply turnup between the radially outermost end or surface of the bead core 10 and the radially innermost end or surface 15 of the bead core 10. The second bead filler 40 is preferably arranged at the axially outer side of the first carcass layer 30 and the second carcass 32 layer.

The example bead portion 5 is attached to, or in contact with, the rim 100. The side wall portion 7 interconnects the tread portion 3 and the bead portion 5. The bead portion(s) 5 hence includes a bead core 10, a first bead filler 20, a second bead filler 40, a first chafer 50, a reinforcing layer 70 as flipper, a second chafer 80, and a toe guard 91.

The bead core 10 allows the attachment of the tire 1 to the rim 100. The bead core 10 is preferably constructed of bead wire (not shown). The first bead filler 20 is arranged at the radially outer side of the bead core 10. The first bead filler 20 preferably has an approximate triangular shape.

The first chafer 50 is arranged at the axially outer side of the bead portion 5. More specifically, the first chafer 50 is arranged at the axially outer side the second carcass layer 32 and the second bead filler 40. A side rubber layer 60 of the side wall portion 7 is arranged at the axially outer side of the first carcass layer 30 and the second carcass layer 32. A second chafer 80 extends axially between the first carcass layer 30 and the second carcass layer 32. The second chafer 80 may prevent toe chipping at the rim 100. A belt layer 90 may be arranged in the tread portion 3 at the axially outer side of the first carcass 30. The belt layer 90 may include, for example, two belts.

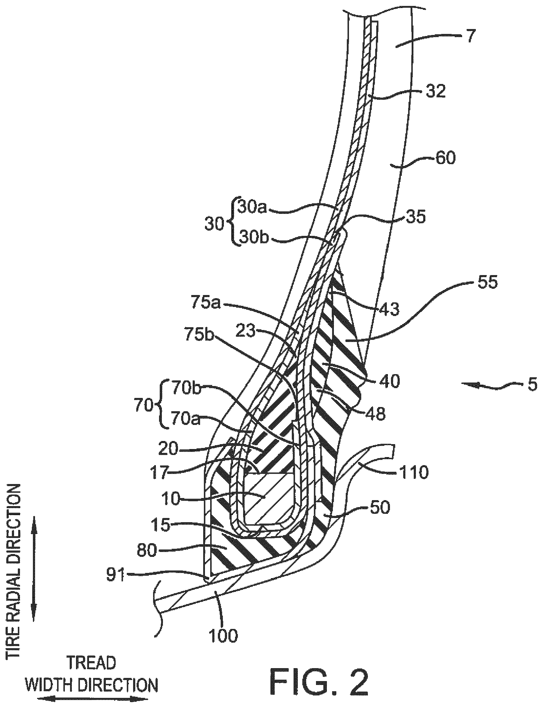

As shown in FIG. 2, the bead portion 5 includes the bead core 10, the first bead filler 20, the first carcass layer 30, the second carcass layer 32, the second bead filler 40, the rubber chafer 50, the reinforcing layer 70, and the second chafer 80. The bead core 10 has a bead core-innermost surface 15 which is an innermost surface of the bead core 10 in the tire radial direction. Further, the bead core 10 has a bead core-outermost surface 17 which is an outermost surface of the bead core 10 in the tire radial direction.

The first bead filler 20 has a first bead filler outer end portion 23 which is an outer end portion in the tire radial direction of the first bead filler 20. As illustrated in FIG. 2, the thickness of the first bead filler outer end portion 23 is reduced toward the outer side in the tire radial direction, that is, the first bead filler outer end portion, which is an outermost end of the first bead filler 20 in the tire radial direction. An inner end portion in the tire radial direction of the first bead filler 20 contacts the bead core 10.

The first carcass layer 30 has an inner first carcass layer part 30a positioned at the inner side in the tread width direction and an outer first carcass layer part 30b curved to the outer side in the tread width direction. The outer first carcass layer part 30b is positioned at the outer side in the tread width direction from the inner carcass layer part 30a. An outer carcass layer outer front end 35, which is an outermost end in the tire radial direction of the outer carcass layer part 30b, contacts the inner carcass layer part 30a. Between the inner first carcass layer part 30a and the outer first carcass layer part 30b, the bead core 10 and the first bead filler 20 are arranged.

The second carcass layer 32 may be arranged at the outer side in the tread width direction of the outer first carcass layer part 30b while contacting the outer first carcass layer part 30b. An outer end portion in the tire radial direction of the second carcass layer 32 is positioned proximate/adjacent the side wall portion 7.

The second bead filler 40 is positioned at the outer side in the tread width direction from the outer first carcass layer part 30b. The second bead filler 40 has a second bead filler outer end portion 43, which is an outer end portion in the tire radial direction, and a second bead filler inner end portion 48, which is an inner end portion in the tire radial direction. As illustrated in FIG. 2, the thickness of the second bead filler 40 is reduced toward the end portion of the second bead filler 40 in the tire radial direction from the center of the second bead filler 40 in the tire radial direction. That is, the thicknesses of the second bead filler outer end portion 43 and the second bead filler inner end portion 48 may be thinner than that of the center of the second bead filler 40.

The second bead filler 40 extends both axially and radially beyond the first bead filler outer end portion 23 in the tread width direction. Accordingly, the second bead filler 40 overlaps the first bead filler outer end portion 23 in the tread width direction. An outermost end of the second bead filler outer end portion 43 in the tire radial direction is positioned at the outer side in the tire radial direction radially outward from the first bead filler outer front end 23. The second bead filler inner end portion 48 is positioned at a radially outer side of the bead core 10. Accordingly, the second bead filler inner end portion 48 is positioned at the outer side in the tire radial direction from the bead core-outermost surface 17. The second bead filler 40 contacts the second carcass layer 32 at the inner side in the tread width direction. The second bead filler 40 contacts the rubber chafer 50 at the outer side in the tread width direction.

The rubber chafer 50 is arranged at the outer side in the tread width direction of the second bead filler 40. The rubber chafer 50 may be exposed at the outer side in the tread width direction of the overall bead portion 5. A rim line is formed at an exposed portion of the rubber chafer 50. The rubber chafer 50 has a rubber chafer outer end portion 55 which is an outer end portion in the tire radial direction. The rubber chafer outer end portion 55 preferably has different heights in the tire radial direction at the inner side in the tread width direction and the outer side in the tread width direction. At the rubber chafer outer end portion 55, a rubber chafer width direction-inner end is positioned at the inner side in the tread width direction and preferably has a height in the tire radial direction, which is higher than that of a rubber chafer width direction-outer end positioned at the outer side in the tread width direction. That is, the rubber chafer width direction-outer end may be so positioned at the inner side in the tire radial direction from the rubber chafer width direction-inner end. The rubber chafer outer end portion 55 approaches the inner side in the tire radial direction as it extends toward the outer side in the tread width direction.

In the tread width direction, the rubber chafer 50 extends outward of the second bead filler 40. Accordingly, the rubber chafer outer end portion 55 is positioned at the outer side in the tread width direction from the second bead filler outer end portion 43. More specifically, the rubber chafer width direction-inner end may be positioned at the outer side in the tread width direction from the second bead filler outer end portion 43. The inner end portion of the rubber chafer 50 in the tire radial direction preferably contacts the rim 100 at a rim flange 110. The rubber chafer 50 is preferably constructed of a rubber-like member with a density lower than that of the second bead filler 40. Further, the loss tangent of the second bead filler 40 is preferably smaller than that of the rubber chafer 50. The side rubber layer 60 may contact the second carcass 32 at the inner side in the tread width direction. The side rubber layer 60 may contact the rubber chafer outer end portion 55 at the inner side in the tire radial direction.

The reinforcing layer 70, which may also be called a flipper, wraps around the bead core 10 and extend radially outward from the radially inner side of the bead core 10. In the tread width direction, the reinforcing layer 70 has an axially inner layer part 70a positioned at the inner side of the bead core 10 and an axially outer layer part 70b positioned at the outer side of the bead core. A radially outer end 75a of the axially inner layer part 70a extends radially outward to a position axially adjacent the inner first carcass 30a, the outer first carcass 30b, preferably the second carcass 32, and the first bead filler outer end portion 23. A radially outer end 75b of the axially outer layer 70b extends radially outward to a position adjacent the first bead filler 20.

The reinforcing layer, or flipper 70, and the bead portion design as shown increases cornering stiffness of tire 1 thereby enhancing dynamic operating conditions, such as ride and handling performance of the tire. Further, such a flipper 70 and the bead portion design as shown provide little or no negative impact to rolling resistance of the tire 1 or other factors, such as manufacturing complexity and cost.

## Claims

1. A tire having a bead portion (5), the bead portion (5) comprising:
a bead core (10);
a first bead filler (20) arranged at a radially outer side of the bead core (10);
a first carcass layer (30) extending around the bead core (10) and the first bead filler (20), the first carcass layer (30) extending radially inward adjacent an axially inner side of the bead core (10), extending axially outward adjacent a radially inner side (15) of the bead core (10), and extending radially outward adjacent an axially outer side of the bead core (10);
a second carcass layer (32) extending radially inward and adjacent the first carcass layer (30);
a second bead filler (40) disposed axially adjacent the second carcass layer (32);
a first chafer (50) disposed at an axially outer side of the second bead filler (40);
a second chafer (80) extended about a radially inner end of the first carcass layer (30); and
a flipper (70) extending radially inward from a position axially adjacent an axially outer side of the first bead filler (20), the flipper (70) extending axially inward adjacent a radially inner side of the bead core (10), and the flipper (70) extending radially outward to position axially adjacent a first part (30a) of the first carcass layer (30), a second part (30b) of the first carcass layer (30) and a radially outermost end (23) of the first bead filler (20); **characterized in that**
the flipper (70) extends radially outward beyond the radially outermost end (23) of the first bead filler (20).

2. The tire of claim 1 with the flipper (70) extending radially outward to position axially adjacent a first part (30a) of the first carcass layer (30), a second part (30b) of the first carcass layer (30), the second carcass layer (32) and a radially outermost end (23) of the first bead filler (20).

3. The tire as set forth in at least one of the previous claims wherein the second bead filler (40) extends axially between the second carcass layer (32) and the first chafer (50).

4. The tire as set forth in at least one of the previous claims further including a toe guard (91) extending between the first chafer (50) and the second chafer (80).

5. The tire as set forth in at least one of the previous claims further including a toe guard (91) extending between the first carcass layer (30) and the second carcass layer (32).

6. A method for stiffening a bead portion (5) of a tire (1), the method comprising the steps of:
arranging a first bead filler (20) at a radially outer side of a bead core (10);
extending a first carcass layer (30) around the bead core (10) and the first bead filler (20);
extending the first carcass layer (30) radially inward adjacent an axially inner side of the bead core (10);
extending the first carcass layer (30) axially outward adjacent a radially inner side (15) of the bead core (10);
extending the first carcass layer (30) radially outward adjacent an axially outer side of the bead core (10);
extending a second carcass layer (32) radially inward and adjacent the first carcass layer (30);
arranging a second bead filler (40) axially adjacent the second carcass layer (32);
arranging a first chafer (50) at an axially outer side of the second bead filler (40);
extending a second chafer (80) about a radially inner end of the first carcass layer (30);
extending a flipper (70) radially inward from a position axially adjacent an axially outer side of the first bead filler (20);
extending the flipper (70) axially inward adjacent a radially inner side (15) of the bead core (10);
extending the flipper (70) radially outward to position axially adjacent a first part (30a) of the first carcass layer (30), a second part (30b) of the first carcass layer (30), optionally the second carcass layer (32), and a radially outermost end (23) of the first bead filler (20); and
terminating a radially innermost end of the second carcass layer (32) axially between the first carcass layer (30) and a toe guard (91).

7. The method as set forth in claim 6 further including the step of extending the flipper (70) radially outward beyond the radially outermost end (23) of the first bead filler (20).

8. The method as set forth in at least one of the claims 6 or 7 further including the step of extending the second bead filler (40) axially between the second carcass layer (32) and the first chafer (50).

## Patentansprüche

1. Reifen, der einen Wulstabschnitt (5) aufweist, wobei der Wulstabschnitt (5) das Folgende umfasst:
einen Wulstkern (10);
einen ersten Kernreiter (20), der an einer radial äußeren Seite des Wulstkerns (10) angeordnet ist;
eine erste Karkassenlage (30), die sich um den Wulstkern (10) und den ersten Kernreiter (20) herum erstreckt, wobei die erste Karkassenlage (30) sich benachbart zu einer axial inneren Seite des Wulstkerns (10) radial nach innen erstreckt, sich benachbart zu einer radial inneren Seite (15) des Wulstkerns (10) axial nach außen erstreckt, und sich benachbart zu einer axial äußeren Seite des Wulstkerns (10) radial nach außen erstreckt;
eine zweite Karkassenlage (32), die sich radial nach innen und benachbart zu der ersten Karkassenlage (30) erstreckt;
einen zweiten Kernreiter (40), der axial benachbart zu der zweiten Karkassenlage (32) angeordnet ist;
ein erstes Wulstschutzband (50), das an einer axial äußeren Seite des zweiten Kernreiters (40) angeordnet ist;
ein zweites Wulstschutzband (80), das sich um ein radial inneres Ende der ersten Karkassenlage (30) erstreckt; und
einen Wulstschutz (70), der sich aus einer zu einer an der axial äußeren Seite des ersten Kernreiters (20) axial angrenzenden Position radial nach innen erstreckt, wobei der Wulstschutz (70) sich benachbart zu einer radial inneren Seite des Wulstkerns (10) axial nach innen erstreckt, und wobei der Wulstschutz (70) sich radial nach außen zu einer an einem ersten Teil (30a) der ersten Karkassenlage (30) axial angrenzenden Position, zu einem ersten Teil (30a) der ersten Karkassenlage (30), zu einem zweiten Teil (30b) der ersten Karkassenlage (30) und zu einem radial äußersten Ende (23) des ersten Kernreiters (20) erstreckt; **dadurch gekennzeichnet, dass**
der Wulstschutz (70) sich radial nach außen über das radial äußerste Ende (23) des ersten Kernreiters (20) hinaus erstreckt.

2. Reifen nach Anspruch 1, wobei der Wulstschutz (70) sich radial nach außen zu einer an einen ersten Teil (30a) der ersten Karkassenlage (30) axial angrenzenden Position, zu einem zweiten Teil (30b) der ersten Karkassenlage (30), zu der zweiten Karkassenlage (32) und zu einem radial äußersten Ende (23) des ersten Kernreiters (20) erstreckt.

3. Reifen nach mindestens einem der vorhergehenden Ansprüche, wobei der zweite Kernreiter (40) sich axial zwischen der zweiten Karkassenlage (32) und dem ersten Wulstschutzband (50) erstreckt.

4. Reifen nach mindestens einem der vorhergehenden Ansprüche, wobei der Reifen außerdem einen Wulstzehe-Gummistreifen (91) enthält, der sich zwischen dem ersten Wulstschutzband (50) und dem zweiten Wulstschutzband (80) erstreckt.

5. Reifen nach mindestens einem der vorhergehenden Ansprüche, der außerdem einen Wulstzehe-Gummistreifen (91) enthält, der sich zwischen der ersten Karkassenlage (30) und der zweiten Karkassenlage (32) erstreckt.

6. Verfahren zum Versteifen eines Wulstabschnitts (5) eines Reifens (1), wobei das Verfahren die folgenden Schritte umfasst:
das Anordnen eines ersten Kernreiters (20) an eine radial äußere Seite eines Wulstkerns (10);
das Erstrecken einer ersten Karkassenlage (30) um den Wulstkern (10) und den ersten Kernreiter (20);
das Erstrecken der ersten Karkassenlage (30) radial nach innen benachbart zu einer axial inneren Seite des Wulstkerns (10);
das Erstrecken der ersten Karkassenlage (30) axial nach außen benachbart zu einer radial inneren Seite (15) des Wulstkerns (10);
das Erstrecken der ersten Karkassenlage (30) radial nach außen benachbart zu einer axial äußeren Seite des Wulstkerns (10);
das Erstrecken einer zweiten Karkassenlage (32) radial nach innen und benachbart zu der ersten Karkassenlage (30);
das Anordnen eines zweiten Kernreiters (40) axial benachbart zu der zweiten Karkassenlage (32);
das Anordnen eines ersten Wulstschutzbandes (50) an eine axial äußere Seite des zweiten Kernreiters (40);
das Erstrecken eines zweiten Wulstschutzbandes (80) um ein radial inneres Ende der ersten Karkassenlage (30);
das Erstrecken eines Wulstschutzes (70) aus einer an eine axial äußere Seite des ersten Kernreiters (20) axial angrenzenden Position, radial nach innen;
das axial nach innen Erstrecken des Wulstschutzes (70) benachbart zu einer radial inneren Seite (15) des Wulstkerns (10);
das radial nach außen Erstrecken des Wulstschutzes (70) zu einer Position, die axial an einen ersten Teil (30a) der ersten Karkassenlage (30), an einen zweiten Teil (30b) der ersten Karkassenlage (30), optional an die zweite Karkassenlage (30), und an ein radial äußerstes Ende (23) des ersten Kernreiters (20) axial angrenzt; und
das Abschließen eines radial innersten Ende der zweiten Karkassenlage (32) axial zwischen der ersten Karkassenlage (30) und einem Wulstzehe-Gummistreifen (91).

7. Verfahren nach Anspruch 6, das ferner den Schritt umfasst, in dem der Wulstschutz (70) sich radial nach außen über das radial äußerste Ende (23) des ersten Kernreiters (20) hinaus erstreckt.

8. Verfahren nach mindestens einem der Ansprüche 6 oder 7, das ferner den Schritt enthält, in dem der zweite Kernreiter (40) sich axial zwischen der zweiten Karkassenlage (32) und dem ersten Wulstschutz (50) erstreckt.

## Revendications

1. Bandage pneumatique possédant une portion (5) faisant office de talon, la portion (5) faisant office de talon comprenant :
une tringle de talon (10) ;
un premier bourrage sur tringle (20) qui est disposé à un côté externe, dans la direction radiale, de la tringle de talon (10) ;
une première couche de carcasse (30) qui s'étend autour de la tringle de talon (10) et du premier bourrage sur tringle (20), la première couche de carcasse (30) s'étendant, dans la direction radiale, vers l'intérieur, en position adjacente à un côté interne, dans la direction axiale, de la tringle de talon (10), s'étendant, dans la direction axiale, vers l'extérieur, en position adjacente à un côté interne (15), dans la direction radiale, de la tringle de talon (10), et s'étendant, dans la direction radiale, vers l'extérieur, en position adjacente à un côté externe, dans la direction axiale, de la tringle de talon (10) ;
une seconde couche de carcasse (32) qui s'étend, dans la direction radiale, vers l'intérieur et en position adjacente à la première couche de carcasse (30) ;
un second bourrage sur tringle (40) qui est disposé, dans la direction axiale, en position adjacente à la seconde couche de carcasse (32) ;
une première bandelette talon (50) qui est disposée à un côté externe, dans la direction axiale, du second bourrage sur tringle (40) ;
une seconde bandelette talon (80) qui s'étend autour d'une extrémité interne, dans la direction radiale, de la première couche de carcasse (30) ; et
une protection de tringle (70) qui s'étend, dans la direction radiale, vers l'intérieur, à partir d'une position située, dans la direction axiale, en position adjacente à un côté externe, dans la direction axiale, du second bourrage sur tringle (20), la protection de tringle (70) s'étendant, dans la direction axiale, vers l'intérieur, en position adjacente à un côté interne, dans la direction radiale, de la tringle de talon (10), et la protection de tringle (70) s'étendant, dans la direction radiale, vers l'extérieur, jusqu'à une position située, dans la direction axiale, en position adjacente à une première partie (30a) de la première couche de carcasse (30), à une seconde partie (30b) de la première couche de carcasse (30) et à une extrémité (23) la plus externe, dans la direction radiale, du premier bourrage sur tringle (20) ; **caractérisé en ce que**
la protection de tringle (70) s'étend, dans la direction radiale, vers l'extérieur, au-delà de l'extrémité la plus externe (23), dans la direction radiale, du premier bourrage sur tringle (20).

2. Bandage pneumatique selon la revendication 1, dans lequel la protection de tringle (70) s'étend, dans la direction radiale, vers l'extérieur, jusqu'à une position située, dans la direction axiale, en position adjacente à une première partie (30a) de la première couche de carcasse (30), à une seconde partie (30b) de la première couche de carcasse (30), à la seconde couche de carcasse (32) et à une extrémité (23) la plus externe, dans la direction radiale, du premier bourrage sur tringle (20).

3. Bandage pneumatique tel que représenté dans au moins une des revendications précédentes, dans lequel le second bourrage sur tringle (40) s'étend, dans la direction axiale, entre la seconde couche de carcasse (32) et la première bandelette talon (50).

4. Bandage pneumatique tel que représenté dans au moins une des revendications précédentes, qui comprend en outre une protection de talon (91) qui s'étend entre la première bandelette talon (50) et la seconde bandelette talon (80).

5. Bandage pneumatique tel que représenté dans au moins une des revendications précédentes, qui comprend en outre une protection de talon (91) qui s'étend entre la première couche de carcasse (30) et la seconde couche de carcasse (32).

6. Procédé destiné à renforcer une portion (5) d'un bandage pneumatique (1), faisant office de talon, le procédé comprenant les étapes dans lesquelles :
on dispose un premier bourrage sur tringle (20) à un côté externe, dans la direction radiale, d'une tringle de talon (10) ;
on étend une première couche de carcasse (30) autour de la tringle de talon (10) et du premier bourrage sur tringle (20) ;
on étend la première couche de carcasse (30), dans la direction radiale, vers l'intérieur, en position adjacente à un côté interne, dans la direction axiale, de la tringle de talon (10) ;
on étend la première couche de carcasse (30), dans la direction axiale, vers l'extérieur, en position adjacente à un côté interne (15), dans la direction radiale, de la tringle de talon (10) ;
on étend la première couche de carcasse (30), dans la direction radiale, vers l'extérieur, en position adjacente à un côté externe, dans la direction axiale, de la tringle de talon (10) ;
on étend une seconde couche de carcasse (32) dans la direction radiale, vers l'intérieur et en position adjacente à la première couche de carcasse (30) ;
on dispose un second bourrage sur tringle (40), dans la direction axiale, en position adjacente à la seconde couche de carcasse (32) ;
on dispose une première bandelette talon (50) à un côté externe, dans la direction axiale, du second bourrage sur tringle (40) ;
on étend une seconde bandelette talon (80) autour d'une extrémité interne, dans la direction radiale, de la première couche de carcasse (30) ;
on étend une protection de tringle (70), dans la direction radiale, vers l'intérieur, à partir d'une position située, dans la direction axiale, en position adjacente à un côté externe, dans la direction axiale, du second bourrage sur tringle (20) ;
on étend la protection de tringle (70), dans la direction axiale, vers l'intérieur, en position adjacente à un côté interne, dans la direction radiale, de la tringle de talon (10) ;
on étend la protection de tringle (70), dans la direction radiale, vers l'extérieur, jusqu'à une position située, dans la direction axiale, en position adjacente à une première partie (30a) de la première couche de carcasse (30), à une seconde partie (30b) de la première couche de carcasse (30), de manière facultative à la seconde couche de carcasse (32), et à une extrémité (23) la plus externe, dans la direction radiale, du premier bourrage sur tringle (20) ; et
on fait en sorte qu'une extrémité la plus interne, dans la direction radiale, de la seconde couche de carcasse (32) se termine, dans la direction axiale, entre la première couche de carcasse (30) et une protection de talon (91).

7. Procédé tel que représenté à la revendication 6, qui englobe en outre l'étape dans laquelle on étend la protection de tringle (70), dans la direction radiale, vers l'extérieur, au-delà de l'extrémité (23) la plus externe, dans la direction radiale, du premier bourrage sur tringle (20).

8. Procédé tel que représenté dans au moins une des revendications 6 ou 7, qui englobe en outre l'étape dans laquelle on étend le second bourrage sur tringle (40), dans la direction axiale, entre la seconde couche de carcasse (32) et la première bandelette talon (50).
